# EUROPEAN PATENT APPLICATION

(11) **EP 4 640 754 A1**
(43) Date of publication of application: **29.10.2025**
(21) Application number: 24892665.1
(22) Date of filing: 21.04.2024
(51) Int. Cl.: C08L 5/14, C08K 5/13, C08K 5/053, C08J 5/18

(54) **CARBOXYMETHYL HEMICELLULOSE COMPOSITE THIN FILM AND PREPARATION METHOD THEREFOR**

(30) Priority: 20.11.2023 CN 202311548566
(71) Applicant: Zhejiang Huakang Pharmaceutical Co., Ltd., Quzhou, Zhejiang 324302 (CN)
(72) Inventor: YANG, Wulong, Quzhou, Zhejiang 324302 (CN); CHEN, Tianying, Quzhou, Zhejiang 324302 (CN); YANG, Mingqian, Quzhou, Zhejiang 324302 (CN); TANG, Yanjun, Quzhou, Zhejiang 324302 (CN); LI, Mian, Santa Clara, CA 95054 (US); XU, Weidong, Quzhou, Zhejiang 324302 (CN)
(74) Representative: Dai, Simin
(86) International application number: PCT/CN2024/088998
(87) International publication number: WO 2025/107499

(57) **Abstract**

A carboxymethyl hemicellulose composite film and a preparation method are provided. The composite film includes 95 to 100 parts by weight of carboxymethyl hemicellulose, 1 to 5 parts by weight of gallic acid, and 50 to 60 parts by weight of sorbitol. The carboxymethyl hemicellulose is obtained by an etherification reaction of bamboo hemicellulose with chloroacetic acid under an alkaline condition, and a degree of substitution of the carboxymethyl hemicellulose is within a range of 0.17 to 0.59. The preparation method includes mixing the carboxymethyl hemicellulose with deionized water, the gallic acid, and the sorbitol in sequence to obtain a composite film solution; and slowly pouring the composite film solution into a mold for drying to obtain the carboxymethyl hemicellulose composite film. The preparation method has advantages of antibacterial activity, environmental friendliness, and low cost.

## Description

### CROSS REFERENCE TO RELATED APPLICATIONS

This application claims priority to Chinese Patent Application No. 202311548566.3, filed on November 20, 2023, the entire contents of which are incorporated herein by reference.

### TECHNICAL FIELD

The present disclosure relates to the technical field of the preparation of a composite film, and in particular, to a carboxymethyl hemicellulose composite film and a preparation method thereof.

### BACKGROUND

Hemicellulose is abundantly available and exhibits excellent degradability and biocompatibility, making it suitable for applications in food packaging, pharmaceuticals, paper additives, etc. However, hemicellulose has poor solubility in water and strong intermolecular hydrogen bonding forces, resulting in suboptimal mechanical properties for hemicellulose film materials. Through chemical modification of hemicellulose, as well as the addition of plasticizers and antibacterial agents, the film-forming ability and antibacterial activity of hemicellulose-based film materials can be effectively improved, thereby enhancing their overall performance. Fruits and vegetables need to be isolated from air and microorganisms during storage and transportation to extend their shelf life. Traditional packaging films are mostly derived from non-renewable fossil resources, making the development of environmentally friendly packaging film materials with effective preservation property of great significance.

On the other hand, *Phyllostachys edulis,* recognized as a promising biomass resource, accounts for 72.96% of the total planted area of bamboo in China. The main components of *Phyllostachys edulis* are cellulose, hemicellulose, and lignin, of which hemicellulose accounts for 20% to 30%. Therefore, the separation, purification, and conversion of hemicellulose from *Phyllostachys edulis* into high-value products present a broad market prospect.

### SUMMARY

The technical problem to be solved in the present disclosure is to provide a carboxymethyl hemicellulose composite film and the preparation method thereof. The preparation method uses bamboo hemicellulose to prepare carboxymethyl hemicellulose and prepares the carboxymethyl hemicellulose composite film based on the carboxymethyl hemicellulose, which has advantages of antibacterial activity, environmental friendliness, and low cost.

One of embodiments of the present disclosure provides a carboxymethyl hemicellulose composite film and the preparation method thereof. The carboxymethyl hemicellulose composite film comprises 95 to 100 parts by weight of carboxymethyl hemicellulose, 1 to 5 parts by weight of gallic acid, and 50 to 60 parts by weight of sorbitol. The carboxymethyl hemicellulose is obtained by an etherification reaction of bamboo hemicellulose with chloroacetic acid under an alkaline condition, and a degree of substitution of the carboxymethyl hemicellulose is within a range of 0.17 to 0.59.

Due to the low solubility of hemicellulose in water, its film-forming ability is poor. Therefore, carboxymethylation modification of hemicellulose can improve the solubility of the carboxymethyl hemicellulose in water and enhance the biological activity of the composite film. Carboxymethylation modification of hemicellulose extracted from *Phyllostachys edulis* results in the carboxymethylation of the hydroxyl groups on the hemicellulose molecular chains, which effectively improves the physicochemical properties of hemicellulose and enhances its biological activity. The carboxymethyl hemicellulose carries a negative charge, allowing it to adsorb onto the surface of cells. While preventing bacteria from absorbing nutrients, it also disrupts bacterial physiological activities, hindering bacterial reproduction. The sorbitol, as a functional sugar alcohol, is a food-grade plasticizer, which can improve film-forming ability. The gallic acid, as an antibacterial agent, can inhibit the synthesis of polysaccharides on bacterial biofilms, thus hindering bacterial growth and achieving antibacterial effects. In the present disclosure, carboxymethyl hemicellulose, sorbitol, and gallic acid are mixed to form a composite film. By coordinating the properties of these three components and leveraging their respective advantages, the resulting composite film exhibits not only excellent film-forming ability but also antibacterial activity.

One of embodiments of the present disclosure also provides a preparation method for the carboxymethyl hemicellulose composite film, comprising: step (1) mixing the carboxymethyl hemicellulose with deionized water, the gallic acid, and the sorbitol in sequence to obtain a composite film solution; and step (2) slowly pouring the composite film solution into a mold for drying to obtain the carboxymethyl hemicellulose composite film.

The operation process of the preparation method is simple and the preparation time is short, which can effectively address the issue of the poor film-forming ability of hemicellulose, improve the dispersion between the carboxymethyl hemicellulose, the sorbitol, and the gallic acid, and significantly enhance the antibacterial activity of the composite film.

Further, in the step (2), before drying, the composite film solution is subjected to ultrasonic treatment for at least 10 min to remove bubbles.

Further, in the step (2), a drying condition for the carboxymethyl hemicellulose composite film is drying in a forced-air drying oven at 40°C for 48 h.

Compared with the prior art, the carboxymethyl hemicellulose composite film and the preparation method of the present disclosure have the following beneficial effects:

(1) the composite films have good air barrier property and an excellent preservation effect on fruits.

(2) The preparation process is simple, with a short experimental cycle, and the used raw materials are derived from nature and are renewable resources. Therefore, the prepared composite films are biodegradable materials, which can be widely applied in various bio-functional materials and packaging materials.

### BRIEF DESCRIPTION OF THE DRAWINGS

FIG. 1 is comparison images illustrating the solubility effect of carboxymethyl hemicellulose in water;
FIG. 2 is images illustrating the transparency of the macroscopic morphology of composite films in the present disclosure;
FIG. 3 is scanning electron microscope (SEM) images (a-f) illustrating the microscopic morphology of composite films in the present disclosure;
FIG. 4 is a chart illustrating the effect of the degree of substitution of carboxymethyl hemicellulose on the air permeability of composite films in the present disclosure;
FIG. 5 is an image illustrating the effect of the degree of substitution of carboxymethyl hemicellulose on the antibacterial activity of composite films in the present disclosure;
FIG. 6 is a chart illustrating the effect of composite films on the weight loss rate of blueberries in the present disclosure.

### DETAILED DESCRIPTION

In order to make the technical problems to be solved, technical solutions and beneficial effects of the present disclosure more clearly understood, the present disclosure is further described in detail below with reference to the accompanying drawings and embodiments. It should be understood that the specific embodiments described herein are merely used to interpret the present disclosure and are not intended to limit the present disclosure.

In an embodiments of the present disclosure, a carboxymethyl hemicellulose composite film comprises 95 to 100 parts by weight of carboxymethyl hemicellulose, 1 to 5 parts by weight of gallic acid, and 50 to 60 parts by weight of sorbitol, the carboxymethyl hemicellulose is obtained by an etherification reaction of bamboo hemicellulose with chloroacetic acid under an alkaline condition, and a degree of substitution (DS) of the carboxymethyl hemicellulose is within a range of 0.17 to 0.59.

The present disclosure also discloses a preparation method for the carboxymethyl hemicellulose composite film, including following steps:

Step (1) mixing the carboxymethyl hemicellulose with deionized water, the gallic acid, and the sorbitol in sequence to obtain a composite film solution.

Step (2) slowly pouring the composite film solution into a mold for drying to obtain the carboxymethyl hemicellulose composite film.

In the step (2), before drying, the composite film solution is subjected to ultrasonic treatment for at least 10 min to remove bubbles. A drying condition for the carboxymethyl hemicellulose composite film is drying in a forced-air drying oven at 40°C for 48 h.

The carboxymethyl hemicellulose composite film and the preparation method for the carboxymethyl hemicellulose composite film are described in detail below by way of specific examples.

### Example 1

A first example of a preparation method for a carboxymethyl hemicellulose composite film was provided, the method comprising following steps.

Step (11): a hemicellulose-based composite film solution was prepared. 0.35 g of carboxymethyl hemicellulose with a degree of substitution of 0.17, 12.5 g of deionized water, 0.7 mL of gallic acid at a concentration of 0.037 g/mL, and 0.2 g of sorbitol were sequentially added to a 50 mL beaker and stirred at 50°C and 500 r/min for 2 h to obtain the composite film solution.

Step (12): a hemicellulose-based composite film was prepared. The composite film solution was subjected to ultrasonic treatment for 10 min to remove bubbles, then the composite film solution was slowly poured into a silicon mold of 3.5 cm×3.5 cm and dried in a forced-air drying oven at 40°C for 48 h to obtain the carboxymethyl hemicellulose composite film.

### Example 2

A second example of a preparation method for a carboxymethyl hemicellulose composite film was provided, the method comprising following steps.

Step (21): a hemicellulose-based composite film solution was prepared. 0.35 g of carboxymethyl hemicellulose with a degree of substitution of 0.33, 12.5 g of deionized water, 0.7 mL of gallic acid at a concentration of 0.037 g/mL, and 0.2 g of sorbitol were sequentially added to a 50 mL beaker and stirred at 50°C and 500 r/min for 2 h to obtain the composite film solution.

Step (22): a hemicellulose-based composite film was prepared. The composite film solution was subjected to ultrasonic treatment for 10 min to remove bubbles, then the composite film solution was slowly poured into a silicon mold of 3.5cm×3.5cm and dried in a forced-air drying oven at 40°C for 48 h to obtain the carboxymethyl hemicellulose composite film.

### Example 3

A third example of a preparation method for a carboxymethyl hemicellulose composite film is provided, the method comprising following steps.

Step (31): a hemicellulose-based composite film solution was prepared. 0.35 g of carboxymethyl hemicellulose with a degree of substitution of 0.46, 12.5 g of deionized water, 0.7 mL of gallic acid at a concentration of 0.037 g/mL, and 0.2 g of sorbitol were sequentially added to a 50 mL beaker and stirred at 50°C and 500 r/min for 2 h to obtain the composite film solution.

Step (32): a hemicellulose-based composite film was prepared. The composite film solution was subjected to ultrasonic treatment for 10 min to remove bubbles, then the film solution was slowly poured into a silicon mold of 3.5 cm×3.5 cm and dried in a forced-air drying oven at 40°C for 48 h to obtain the carboxymethyl hemicellulose composite film.

### Example 4

A fourth example of a preparation method for a carboxymethyl hemicellulose composite film is provided, the method comprising following steps.

Step (41): a hemicellulose-based composite film solution was prepared. 0.35 g of carboxymethyl hemicellulose with a degree of substitution of 0.59, 12.5 g of deionized water, 0.7 mL of gallic acid at a concentration of 0.037 g/mL, and 0.2 g of sorbitol were sequentially added to a 50 mL beaker and stirred at 50°C and 500 r/min for 2 h to obtain a composite film solution.

Step (42): a hemicellulose-based composite film was prepared. The composite film solution was subjected to ultrasonic treatment for 10 min to remove bubbles, then the film composite solution was slowly poured into a silicon mold of 3.5 cm×3.5 cm and dried in a forced-air drying oven at 40°C for 48 h to obtain the carboxymethyl hemicellulose composite film.

### Comparison example 1

A first comparison example of the present disclosure comprised following steps.

Step (51): a hemicellulose-based composite film solution was prepared. 0.35 g of hemicellulose, 12.5 g of deionized water, 0.7 mL of gallic acid at a concentration of 0.037 g/mL, and 0.2 g of sorbitol were sequentially added to a 50 mL beaker and stirred at 50°C and 500 r/min for 2 h to obtain a composite film solution.

Step (52): a hemicellulose-based composite film was prepared. The composite film solution was subjected to ultrasonic treatment for 10 min to remove bubbles, then the film solution was slowly poured into a silicon mold of 3.5 cm×3.5 cm and dried in a forced-air drying oven at 40°C for 48 h to obtain the composite film.

A supplementary illustration for the figures is provided.

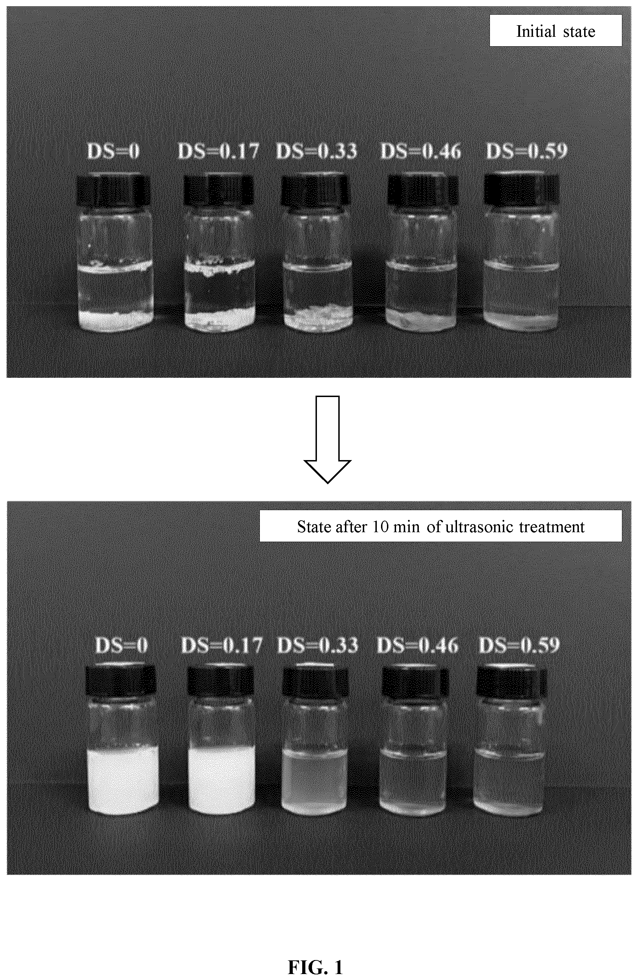

In FIG. 1, the composite film solutions containing carboxymethyl hemicellulose with different DS (0, 0.17, 0.33, 0.46, and 0.59) are presented at an initial state and a state after 10 min of ultrasonic treatment. The solubility of bamboo hemicellulose (DS=0) in water is poor, and the bamboo hemicellulose solution is turbid after 10 min of the ultrasonic treatment, indicating that more bamboo hemicellulose remains undissolved. With the increase of the degree of carboxymethylation modification of the bamboo hemicellulose, the solubility of the modified bamboo hemicellulose in water is gradually improved. When the DS of the carboxymethyl hemicellulose is 0.33, the composite film solution is only slightly turbid after 10 min of the ultrasonic treatment, indicating that the carboxymethyl hemicellulose is mostly dissolved in water. When the DS of the carboxymethyl hemicellulose is within a range of 0.46 to 0.59, the carboxymethyl hemicellulose is completely dissolved in water, and the composite film solution is clarified and transparent, and there is no obvious precipitation at the bottom of the bottle, indicating that the solubility of carboxymethyl hemicellulose in water is significantly improved after carboxymethylation modification.

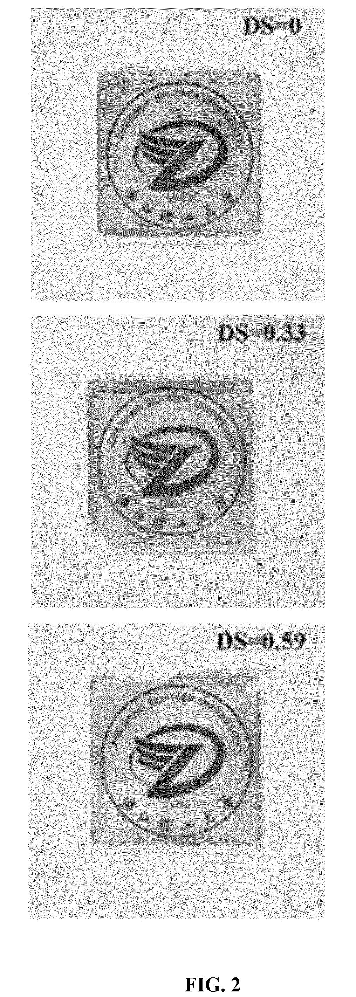

In FIG. 2, the composite films containing carboxymethyl hemicellulose with different DS (0, 0.33, and 0.59) are presented. The composite film prepared by adding bamboo hemicellulose (DS=0) has an uneven surface and low transparency. When using hemicellulose by carboxymethylation modification (DS=0.33 or DS=0.59) to prepare the composite film, the composite film has a smooth and flat surface and high transparency, and the surface flatness and transparency of the composite film improve significantly as the DS of carboxymethyl hemicellulose increases, which results from the fact that the hydrophilicity of the bamboo hemicellulose by the carboxymethylation modification is significantly increased.

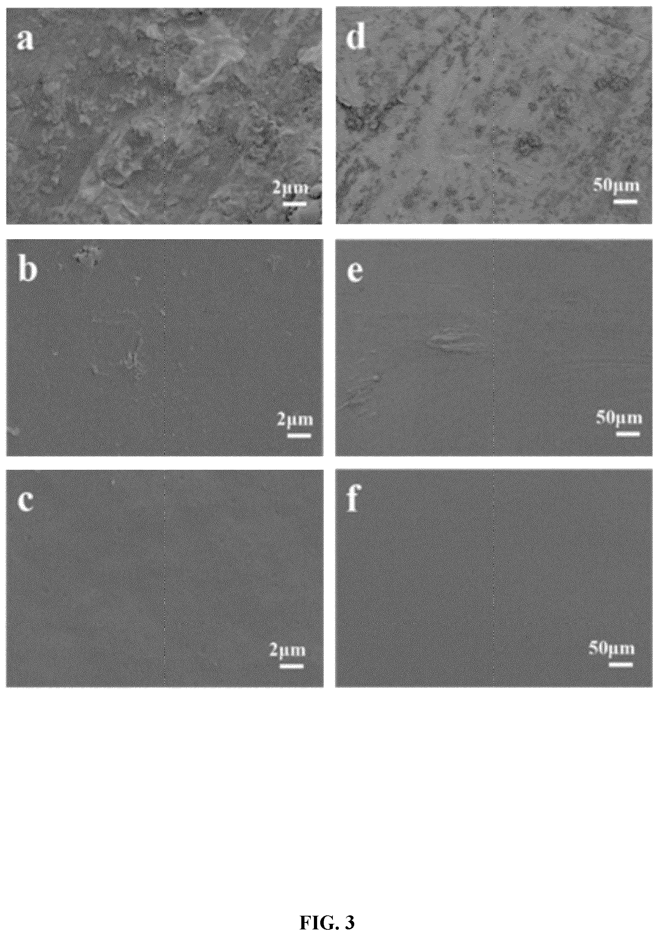

In FIG. 3, SEM images of a composite film containing bamboo hemicellulose (DS=0) are shown in images a and d. As can be seen from the images a and d, the surface of the composite film is rough, which results from the fact that before modification, the bamboo hemicellulose is slightly soluble in water and has poor dispersibility and film-forming ability. SEM images of a composite film containing carboxymethyl hemicellulose (DS=0.33) are shown in images b and e. As can be seen from the images b and e, the roughness of the surface of the composite film is reduced. SEM images of a composite film containing carboxymethyl hemicellulose (DS=0.59) are shown in images c and f. As can be seen from the images c and f, the roughness of the surface of the composite film is further reduced, indicating that the surface of the composite film is flatter and smoother as the DS of carboxymethyl hemicellulose increases.

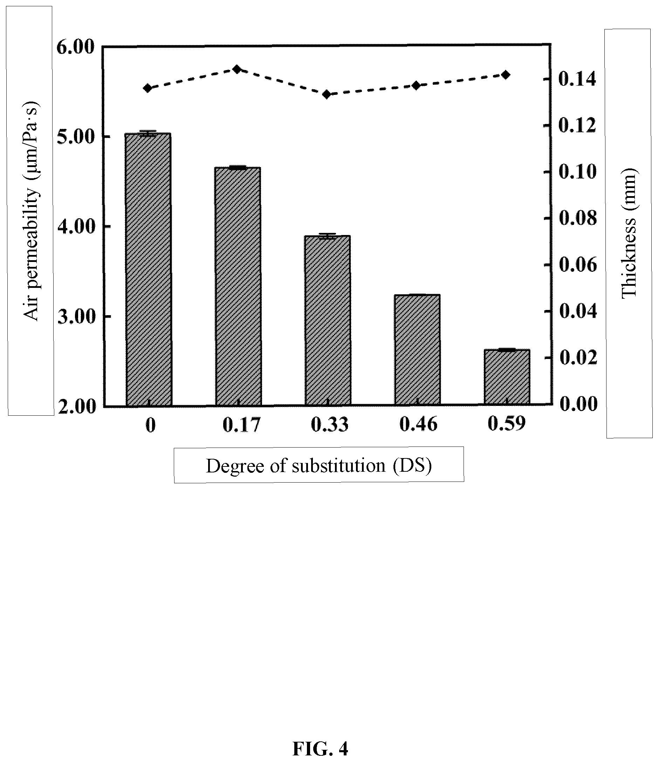

In FIG. 4, a schematic diagram of thickness test comparison and air permeability test comparison is shown for composite films containing carboxymethyl hemicellulose with different DS (0, 0.17, 0.33, 0.46, and 0.59). As can be seen from the FIG. 4, the DS of carboxymethyl hemicellulose has no significant effect on the thickness of the composite films, and the thickness of the composite films is all around 0.14 mm. When using bamboo hemicellulose (DS=0) to obtain the composite film, the air permeability of the composite film is 5.03 µm/Pa·s. As the increase of the DS of carboxymethyl hemicellulose increases, the air permeability of the composite film decreases significantly. When using carboxymethyl hemicellulose with the DS of 0.59 to obtain the composite film, the air permeability of the composite film is 2.60 µm/Pa·s, with a decrease of 48.31% in air permeability. Therefore, it is suggested that the air barrier performance of the composite film is significantly improved with the DS increases.

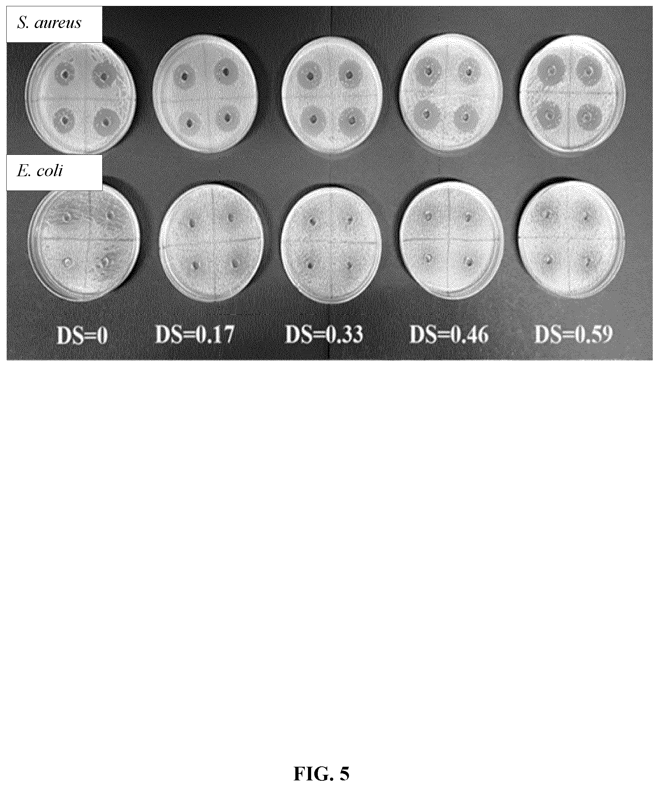

In FIG. 5, comparison images of antibacterial tests of composite films containing carboxymethyl hemicellulose with different DS (0, 0.17, 0.33, 0.46, and 0.59) against *S. aureus* (gram-positive bacteria) and *E. coli* (gram-negative bacteria) are presented. The composite films containing carboxymethyl hemicellulose with different DS exhibit antibacterial activity against *S. aureus,* and distinct inhibition zones form around the composite films. Sorbitol, as a food-grade antibacterial agent, can effectively inhibit bacterial reproduction. Gallic acid can also inhibit the synthesis of polysaccharides on bacterial biofilms, thus hindering bacterial growth. When the DS of carboxymethyl hemicellulose increases, the diameter of the inhibition zone around the composite film increases, indicating that the antibacterial effect of the composite film is better against *S. aureus* as the DS of carboxymethyl hemicellulose increases. However, the composite films have no obvious inhibitory effect on *E. coli.* Comprehensively, the carboxymethyl hemicellulose/sorbitol/gallic acid composite film exhibit certain antibacterial activity, and the inhibitory effect on gram-positive bacteria is better than that on gram-negative bacteria.

In FIG. 5, the diameter of the inhibition zones of carboxymethyl hemicellulose composite films with different DS is shown in Table 1.

**Table 1 Diameter of inhibition zones of carboxymethyl hemicellulose composite films with different DS**

| DS | *S. aureus-diameter* of inhibition zone (mm) | *E. coli*-diameter of inhibition zone (mm) |
|---|---|---|
| 0 | 24±2 | 0 |
| 0.17 | 24±2 | 0 |
| 0.33 | 26±2 | 0 |
| 0.46 | 27±2 | 0 |
| 0.59 | 27±2 | 0 |

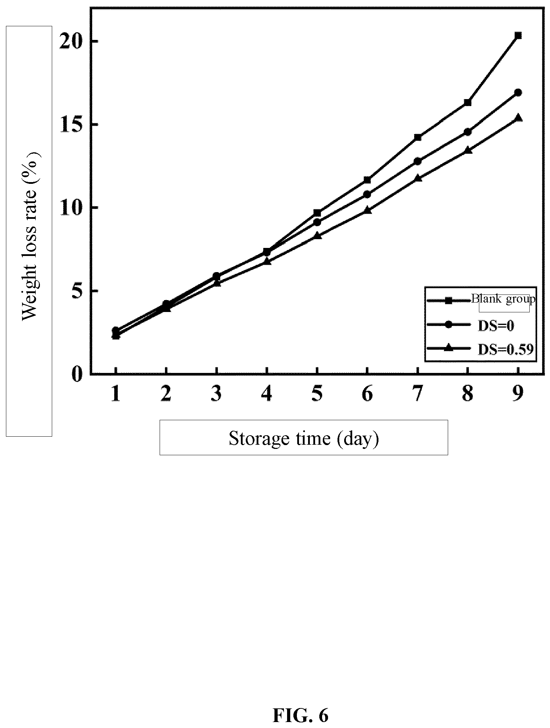

In FIG. 6, a comparison test curve of weight loss rate of blueberries in coating groups and a blank group, the blueberries in the coating groups are coated using composite films containing carboxymethyl hemicellulose with DS of 0 and 0.59 as cling films, and the blueberries in the blank group are not coated with cling film. The weight loss rate of blueberries in the coating groups is all significantly improved compared with blueberries in the blank group. During the first four days of storage, there is a slight difference in weight loss rate of blueberries between the blank group and the coating groups (DS=0 and 0.59). On day 5, the weight loss rate of blueberries in the blank group is 9.67%, while the weight loss rates of blueberries in the coating groups are 9.11% (DS=0) and 8.27% (DS=0.59), which are lower than that of blueberries in the blank group. As the storage time increases, the difference in weight loss rates of blueberries between the blank group and the coating groups (DS=0 and 0.59) become more significant. On day 9, the weight loss rate of blueberries in the blank group is 20.34%, while the weight loss rate of blueberries in the coating group is 16.90% (DS=0) and 15.36% (DS=0.59), which is significantly lower than that of blueberries in the blank group, indicating that the composite films has a certain effect on the preservation of blueberries, and the preservation effect of the carboxymethyl hemicellulose composite films is better than that of the unmodified hemicellulose composite film.

In FIG. 6, the preservation effect of blueberries in the coating groups and the blank group is recorded in Table 2:

**Table 2 Preservation effect of blueberries in coating groups and blank group**

| group | day 0 | day 1 | day 5 | day 9 |
|---|---|---|---|---|
| blank group | fresh | fresh | bright, diminished gloss, slight soft, natural fruit aroma, fresh pleasant scent, no signs of decay | dull fruit surface, glossy-free, soft and flaccid texture, faint natural fruity aroma, small decay spots |
| coating group (DS=0) | fresh | fresh | bright and glossy, moderate firmness, intense natural fruity aroma, no signs of decay | bright, diminished gloss, slight soft, natural fruit aroma, fresh pleasant scent, no signs of decay |
| coating group (DS=0.59) | fresh | fresh | bright and glossy, moderate firmness, intense natural fruity aroma, no signs of decay | bright and glossy, moderate firmness, intense natural fruit aroma, no signs of decay |

The above descriptions are merely preferred embodiments of the present disclosure and are not intended to limit the present disclosure. Any modifications, equivalent substitutions, improvements, etc., made within the spirit and principle of the present disclosure shall be included within the protection scope of the present disclosure.

## Claims

1. A carboxymethyl hemicellulose composite film, comprising 95 to 100 parts by weight of carboxymethyl hemicellulose, 1 to 5 parts by weight of gallic acid, and 50 to 60 parts by weight of sorbitol, wherein the carboxymethyl hemicellulose is obtained by an etherification reaction of bamboo hemicellulose with chloroacetic acid under an alkaline condition, and a degree of substitution of the carboxymethyl hemicellulose is within a range of 0.17 to 0.59.

2. A preparation method for the carboxymethyl hemicellulose composite film of claim 1, comprising:
step (1) mixing the carboxymethyl hemicellulose with deionized water, the gallic acid, and the sorbitol in sequence to obtain a composite film solution;
step (2) slowly pouring the composite film solution into a mold for drying to obtain the carboxymethyl hemicellulose composite film.

3. The preparation method of claim 2, wherein in the step (2), before drying, the composite film solution is subjected to ultrasonic treatment for at least 10 min to remove bubbles.

4. The preparation method of claim 2, wherein in the step (2), a drying condition for the carboxymethyl hemicellulose composite film is drying in a forced-air drying oven at 40°C for 48 h.
